# EUROPEAN PATENT SPECIFICATION

(11) **EP 2 162 942 B1**
(45) Date of publication and mention of the grant of the patent: **23.11.2016**
(21) Application number: 08757027.1
(22) Date of filing: 27.06.2008
(51) Int. Cl.: H01M 10/26, H01M 10/24, H01M 10/36, H01M 4/58, H01M 6/16, H01M 10/0567, H01M 10/052, H01M 10/0569, H01M 10/0568

(54) **LITHIUM ENERGY STORAGE DEVICE**
LITHIUM-ENERGIESPEICHEREINRICHTUNG
DISPOSITIF DE STOCKAGE D'ÉNERGIE AU LITHIUM

(30) Priority: 29.06.2007 AU 2007903507 P
(43) Date of publication of application: 17.03.2010
(73) Proprietor: Commonwealth Scientific and Industrial Research Organisation, Campbell, Australian Capital Territory 2612 (AU)
(72) Inventor: BEST, Adam Samuel, Ferntree Gully, Victoria 3156 (AU); HOLLENKAMP, Anthony Frank, Camberwell, Victoria 3124 (AU); BHATT, Anand Indravadan, Clayton South Melborne Victoria 3169 (AU)
(74) Representative: Ishiguro, Masaoki
(86) International application number: PCT/AU2008/000950
(87) International publication number: WO 2009/003224

(56) References cited:
- EP-A1- 1 995 817
- WO-A1-2005/064733
- WO-A1-2007/088677
- US-A- 5 389 467
- US-A1- 2004 106 047
- US-A1- 2006 228 626

## Description

### Technical Field

The present invention relates to lithium-based energy storage devices.

### Background Art

In recent times, there has been increasing interest in new materials for forming energy storage devices including lithium energy storage devices, such as lithium batteries (both Li-ion and Li-metal batteries).

Electrochemical devices contain electrolytes within which charge carriers (either ions, also referred to as target ions, or other charge carrying species) can move to enable the function of the given device. There are many different types of electrolytes available for use in electrochemical devices. In the case of lithium-ion and lithium metal batteries, these include gel electrolytes, polyelectrolytes, gel polyelectrolytes, ionic liquids, plastic crystals and other non-aqueous liquids, such as ethylene carbonate, propylene carbonate and diethyl carbonate.

Ideally, the electrolytes used in these devices are electrochemically stable, have high ionic conductivity, have a high target ion transport number (i.e. high mobility of the target ion compared to that of other charge carriers) and provide a stable electrolyte-electrode interface which allows charge transfer. The electrolytes should ideally also be thermally stable, and non-flammable.

In the case of the lithium batteries previously mentioned, these may be primary or, more typically, secondary (rechargeable) batteries. Lithium rechargeable batteries offer advantages over other secondary battery technologies due to their higher gravimetric and volumetric capacities as well as higher specific energy.

The two classes of lithium batteries mentioned above differ in that the negative electrode is lithium metal for lithium metal batteries, and is a lithium intercalation material for the "lithium - ion batteries".

In terms of specific energy and power, lithium metal is the preferred negative electrode material. However, when `traditional' solvents are used in combination with lithium metal negative electrodes, there is a tendency for the lithium metal electrode to develop a dendritic surface. The dendritic deposits limit cycle life and present a safety hazard due to their ability to short circuit the cell - potentially resulting in fire and explosion. These shortcomings have necessitated the use of lithium intercalation materials as negative electrodes (creating the well-known lithium-ion technology), at the cost of additional mass and volume for the battery.

In a secondary lithium metal battery, the solid electrolyte interphase (SEI) is formed on the lithium electrode surface. The SEI is a passivation layer that forms rapidly because of the reactive nature of lithium metal. The SEI has a dual role. Firstly, it forms a passivating film that protects the lithium surface from further reaction with the electrolyte and/or contaminants. In addition, the SEI acts as a lithium conductor that allows the passage of charge, as lithium ions, to and from the lithium surface during the charge/discharge cycling of a lithium metal secondary cell. The SEI is also known to form on the surface of the negative electrode in a secondary lithium-ion battery.

However, the SEI is present as a resistive component in the cell and can lead to a reduced cell voltage (and hence cell power) in some cases.

Researchers have continued to search for a solution to the poor cycling characteristics of the lithium metal electrode - notably through the use of polymer electrolytes. However lithium ion motion in polymer electrolytes is mediated by segmental motions of the polymer chain leading to relatively low conductivity. The low conductivity and low transport number of the polymer electrolytes has restricted their application in practical devices.

Such problems of low conductivity and low transport number of the target ion apply similarly to other electrolytes used in lithium metal batteries, lithium-ion batteries, batteries more generally, and to an extent all other electrochemical devices.

It would be advantageous to provide new alternatives for materials to be used in lithium-based energy storage devices to improve the lithium ion conductivity and diffusivity within the electrolyte to enhance room temperature battery performance, or that otherwise enhance battery performance.

EP 1 995 817 relates to a lithium secondary battery comprising lithium bis(fluorosulfonyl)imide as a component of the electrolyte.

### Summary of the Invention

According to the present invention there is provided a lithium energy storage device comprising:
- at least one positive electrode,
- at least one negative electrode, and
- an ionic liquid electrolyte comprising bis(fluorosulfonyl)imide as the anion and a cation counterion and lithium ions at a level of greater than 0.3 mol/kg of ionic liquid, and not more than 1.5 mol/kg of ionic liquid and an organic solvent.

Bis(fluorosulfonyl)imide is commonly abbreviated to FSI. Other names for the anion are bis(fluorosulfonyl)imidide and bis(fluorosulfonyl)amide, and therefore another abbreviation for the same anion is FSA.

It has been found that using the combination of an FSI electrolyte with lithium doping in the specified range, unexpectedly gives improved conductivity, viscosity, lithium-ion diffusivities and allows Lithium metal plating and stripping to occur at higher current densities when compared to other known room temperature ionic liquids and electrolytes.

Preferably the ionic liquid electrolyte comprises LiBF4 or LiPF6.

It has been found that the combination of FSI ionic liquid electrolyte, with LiBF₄ or LiPF₆ in particular, gives unexpectedly improved conductivity, viscosity lithium-ion diffusivities and allows lithium metal plating and stripping to occur at higher current densities when compared to TFSI-based electrolytes and when compared to FSI-based electrolytes with different lithium salts.

Preferably the lithium energy storage device comprises at least one positive electrode comprising lithium metal phosphate, in which the metal is a first-row transition metal, or a doped derivative thereof.

An example of a lithium metal phosphate is lithium iron phosphate.

It has been found that the combination of lithium metal phosphate as the positive electrode (cathode) material, with an FSI-based ionic liquid electrolyte provides a very robust device which is resistant to the corrosive FSI-based ionic liquid electrolyte. This cathode material has been found to be unexpectedly resistant to the solvation properties of the ionic liquid, which for other cathodes can leach transition metal ions out of the cathode material structure, resulting in structural damage and collapsing of the structure. In lithium energy storage devices with an FSI-based ionic liquid electrolyte where a material other than lithium metal phosphate is used as the cathode material, such materials should be coated or protected with a nanolayer of a protective coating. Such a protective coating is not required for lithium metal phosphate - it is suitably protective coating-free. It is however noted that the lithium metal phosphate cathode can be coated with ether types of coatings, such as conductive coatings which improve electrical conductivity of the active metals.

The device suitably also comprises a case for containing the electrodes and electrolyte, and electrical terminals for convection equipment to be powered by the energy storage device. The device may also comprise separators located between the adjacent positive and negative electrodes.

### Brief Description of the Figures

Figure 1 shows an energy storage device in accordance with one embodiment of the present invention.
Figure 2 is a graph showing a comparison of LiTFSI salt concentrations in Pyr₁₃FSI at room temperature using platinum (Pt) working electrode, wound Pt counter electrode and a Ag/Ag⁺ reference electrode consisting of a compartmentalised solution of Pyr₁₄TFSI + 10mM AgCF₃SO₃ with an Ag wire. A scan rate of 50 mV.s⁻¹ was used.
Figure 3 is a graph showing the cyclic voltammetry of Pyr₁₃FSI + 0.5 mol/kg LiTFSI at room temperature using platinum (Pt) working electrode, wound Pt counter electrode and a Ag / Ag⁺ reference electrode consisting of a compartmentalised solution of Pyr₁₄TFSI + 10mM AgCF₃SO₃ with a Ag wire. A scan rate of 50 mV.s⁻¹ was used.
Figure 4 is a graph showing Pyr₁₃FSI - 0.5 mol/kg LiTFSI cycled at 0.1mA.cm⁻² at 50°C for 50 cycles.
Figure 5 is a graph showing Pyr₁₃FSI + 0.5 mol/kg LiTFSI cycled galvanostatically at 0.1mA.cm⁻² for 10 cycles, followed by 0.25 mA.cm⁻² for 10 cycles, 0.5 mA.cm⁻² for 10 cycles and 1 mA.cm⁻² for 10 cycles, at 50°C.
Figure 6 is a graph showing the cyclic voltammetry of Pyr₁₃FSI + 0.5 mol/kg LiBF₄ at 50°C using platinum (Pt) working electrode, wound Pt counter electrode and a Ag / Ag⁺ reference electrode consisting of a compartmentalised solution of Pyr₁₄TFSI + 10mM AgCF₃SO₃ with a Ag wire. A scan rate of 50 mV.s⁻¹ was used.
Figure 7 is a graph showing Pyr₁₃FSI + 0.5 mol/kg LiBF₄ cycled galvanostatically at 0.1mA.cm⁻² at 50°C for 50 cycles.
Figure 8 is a graph showing Pyr₁₃FSI + 0.5 mol/kg LiBF₄ cycled at 0.1mA.cm⁻² for 10 cycles, followed by 0.25 mA.cm⁻² for 10 cycles, 0.5 mA.cm⁻² for 10 cycles and 1 mA.cm⁻² for 10 cycles at 50°C.
Figure 9 is a graph showing impedance spectroscopy of a lithium symmetrical cell of Pyr₁₃FSI + 0.5 mol/kg LiBF₄, at 50°C, measured at open circuit potential after each of the different current densities.
Figure 10 is a graph showing the cyclic voltammetry of Pyr₁₃FSI + 0.5 mol/kg LiPF₆ at room temperature using platinum (Pt) working electrode, wound Pt counter electrode and a Ag / Ag⁺ reference electrode consisting of a compartmentalised solution of Pyr₁₄TFSI + 10mM AgCF₃SO₃ with a Ag wire. A scan rate of 50 mV.s⁻¹ was used. Every second scan from 1 to 19 is shown.
Figure 11 is a graph of Pyr₁₃FSI + 0.5 mol/kg LiPF₆ cycled galvanostatically at 0.1mA.cm⁻² for 50 cycles at room temperature.
Figure 12 is a graph showing the cyclic voltammetry of EMIM FSI + 0.5 mol/kg LiTFSI at room temperature using platinum (Pt) working electrode, wound Pt counter electrode and a Ag / Ag⁺ reference electrode consisting of a compartmentalised solution of Pyr₁₄TFSI + 10mM AgCF₃SO₃ with a Ag wire. A scan rate of 50 mV.s⁻¹ was used.
Figure 13 is a graph of EMIM FSI + 0.5 mol/kg LiTFSI cycled galvanostatically at 0.1mA.cm⁻² at room temperature for 50 cycles.
Figure 14 is a graph of EMIM FSI + 0.5 mol/kg LiTFSI cycled galvanostatically at 0.1mA.cm⁻² for 10 cycles, 0.25 mA.cm⁻² for 10 cycles, 0.5 mA.cm⁻² for 10 cycles and 1 mA.cm⁻² for 10 cycles, all at room temperature.
Figure 15 is a graph of the impedance spectroscopy of a Lithium symmetrical cell of EMIM FSI + 0.5 mol/kg LiTFSI, at room temperature, measured at open circuit potential after each of the different current densities. The insert is the enlargement of high frequency region of the Nyquist plot, showing a significant reduction in the impedance of the cell with continued cycling.
Figure 16 is a graph showing the capacity and discharge efficiency of a 2032 coin cell consisting of a lithium metal electrode, solupor separator with 5 drops of Pyr₁₃FSI + 0.5 mol/kg LiTFSI electrolyte and a LiFePO₄ cathode cycled at 50°C using two different C-rates. Closed Diamonds - charge capacity, Closed Squares - Discharge capacity, Open Squares - discharge efficiency.
Figure 17 is a graph showing the capacity of a 2032 coin cell consisting of a lithium metal electrode, solupor separator with 5 drops of Pyr₁₃FSI + 0.5 mol/kg LiTFSI electrolyte and a LiFePO₄ cathode cycled at 50°C using various rates. Closed Diamonds - charge capacity, Closed Squares - Discharge capacity, Open Squares - discharge efficiency.
Figure 18 is a graph showing the capacity (mAh.g⁻¹) versus C-rate for a duplicate cell of LiFePO₄ / Pyr₁₃ FSI + 0.5 mol/kg LiTFSI / Lithium metal.
Figure 19 is a graph showing the impedance spectroscopy data as a function of cycle number for a cell consisting of a lithium metal electrode, solupor separator with 5 drops of Pyr₁₃FSI + 0.5 mol/kg LiTFSI electrolyte and a LiFePO₄ cathode at 50°C.
Figure 20 is a graph showing the capacity of a 2032 coin cell consisting of a lithium metal electrode, Solupor separator with 5 drops of BMMIM FSI + 0.5 mol/kg LiTFSI electrolyte and a LiFePO₄ cathode with a loading of 5 mg.cm⁻² cycled at room temperature and 50°C. A constant current charge of C/10 was used and various discharges in the order of C/10, C/5, C/2 and 1C for 5 cycles each. Open Squares - charge capacity, Closed Squares - Discharge capacity, Open Circles -charge capacity, Closed Circles - discharge capacity.
Figure 21 is a graph showing the discharge capacity (mAh.g⁻¹) versus C-rate for cells of LiFePO₄ / BMMIM FSI + 0.5 mol/kg LiTFSI / Lithium metal with various loadings of active material and temperatures. Closed Circles - loading 4 mg.cm⁻² and 50°C, Closed Squares - 3.3mg.cm⁻² and 50°C, Open Triangle - 4.3 mg.cm⁻² and room temperature, Crosses - 3.8 mg.cm⁻² and room temperature.

### Detailed Description of the Invention

The term "energy storage device" broadly encompasses all devices that store or hold electrical energy, and encompasses batteries, supercapacitors and asymmetric (hybrid) battery-supercapacitors. The term battery encompasses single cells.

Lithium-based energy storage devices are those devices that contain lithium ions in the electrolyte, such as lithium batteries.

The term lithium battery encompasses both lithium ion batteries and lithium metal batteries.

Lithium ion batteries and lithium metal batteries are well known and understood devices, the typical general components of which are well known in the art of the invention.

Secondary lithium batteries are lithium batteries which are rechargeable. The lithium energy storage devices of the present application are preferably secondary lithium batteries. In secondary batteries the combination of the electrolyte and negative electrode of such batteries must be such as to enable both plating/alloying (or intercalation) of lithium onto the electrode (i.e. charging) and stripping/de-alloying (or de-intercalation) of lithium from the electrode (i.e. discharging). The electrolyte is required to have a high stability towards lithium, for instance approaching ∼0V vs. Li/Li⁺. The electrolyte cycle life is also required to be sufficiently good, for instance at least 100 cycles (for some applications), and for others, at least 1000 cycles.

### Secondary Lithium Batteries

The general components of a secondary lithium battery are well known and understood in the art of the invention. The principal components are:
a battery case, of any suitable shape, standard or otherwise, which is made from an appropriate material for containing the electrolyte, such as aluminium or steel, and usually not plastic;
battery terminals of a typical configuration;
at least one negative electrode;
at least one positive electrode;
optionally, a separator for separating the negative electrode from the positive electrode; and
an electrolyte containing lithium mobile ions.

### Electrolyte

The lithium energy storage devices of the present invention comprise an ionic liquid electrolyte comprising bis(fluorosulfonyl)imide as the anion and a cation counterion.

Ionic liquids, which are sometimes referred to as room temperature ionic liquids, are organic ionic salts having a melting point below the boiling point of water (100°C).

The anion is bis(fluorosulfonyl)imide, shown below, which is commonly abbreviated to FSI. Other names for the anion are bis(fluorosulfonyl)imide and bis(fluorosulfonyl)amide, and therefore another abbreviation for the same anion is FSA.

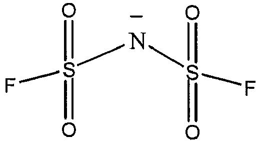

The cation counterion may be any of the cations known for use as components of ionic liquids. The cation may be an unsaturated heterocyclic cation, a saturated heterocyclic cation or a non-cyclic quaternary cation.

The unsaturated heterocyclic cations encompass the substituted and unsubstituted pyridiniums, pyridaziniums, pyrimidiniums, pyraziniums, imidazoliums, pyrazoliums, thiazoliums, oxazoliums and triazoliums, two-ring system equivalents thereof (such as isoindoliniums) and so forth. The general class of unsaturated heterocyclic cations may be divided into a first subgroup encompassing pyridiniums, pyridaziniums, pyrimidiniums, pyraziniums, pyrazoliums, thiazoliums, oxazoliums, triazoliums, and multi-ring (i.e., two or more ring-containing) unsaturated heterocyclic ring systems such as the isoindoliniums, on the one hand, and a second subgroup encompassing imidazoliums, on the other.

Two examples of this general class are represented below: 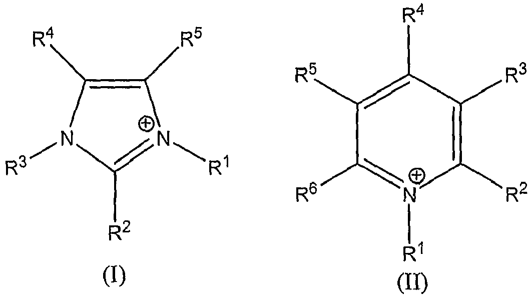 in which:
R¹ to R⁶ are each independently selected from H, alkyl, haloalkyl, thio, alkylthio and haloalkylthio.

The saturated heterocyclic cations encompass the pyrrolidiniums, piperaziniums, piperidiniums, and the phosphorous and arsenic derivatives thereof.

Examples of these are represented below: 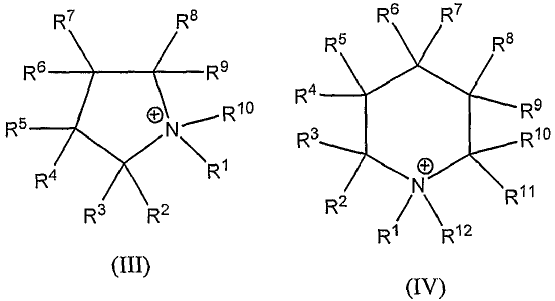 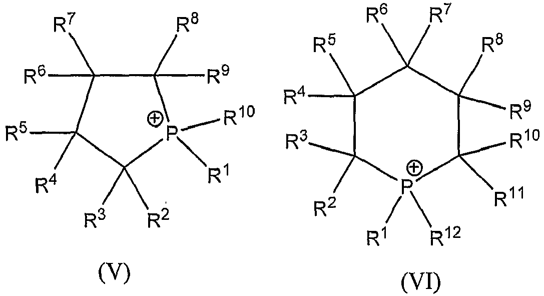 in which:
R¹ to R¹² are each independently selected from H, alkyl, haloalkyl, thio, alkylthio and haloalkylthio.

The non-cyclic quaternary cations encompass the quaternary ammonium, phosphonium and arsenic derivatives.

Examples of these are represented below: 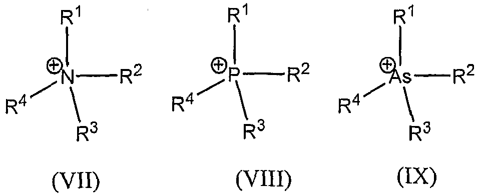 in which:
R₁ to R₄ are each independently selected from H, alkyl, haloalkyl, thio, alkylthio and haloalkylthio.

The term "alkyl" is used in its broadest sense to refer to any straight chain, branched or cyclic alkyl groups of from 1 to 20 carbon atoms in length and preferably from 1 to 10 atoms in length. The term encompasses methyl, ethyl, propyl, butyl, s-butyl, pentyl, hexyl and so forth. The alkyl group is preferably straight chained. The alkyl chain may also contain hetero-atoms, and may be optionally substituted by a nitrile group, hydroxyl group, carbonyl group and generally other groups or ring fragments consistent with the substituent promoting or supporting electrochemical stability and conductivity.

Halogen, halo, the abbreviation "Hal" and the like terms refer to fluoro, chloro, bromo and iodo, or the halide anions as the case may be.

Of the possible counterions for the FSI-electrolyte, the 1,3-dialkyl or 1,2,3-trialkyl imidazoliums, 1,1-dialkyl pyrrolidinium and and 1,1-dialkyl piperidiniums are most preferred.

### Mobile Lithium ions

The ionic liquid electrolyte contains Lithium mobile ions, which are introduced as a salt, otherwise known as a dopant. The level of lithium salt doping is greater than 0.3 mol/kg and up to a maximum of 1.5 mol/kg. This level, which is greater than levels of lithium salt doping considered to be suited in other devices, unexpectedly provides higher conductivity and higher lithium ion diffusivity. Preferably the level of lithium salt doping is between 0.35 mol/kg and 1.0 mol/kg. In some embodiments, the level of lithium salt doping is between 0.4 mol/kg and 1.0 mol/kg. In some embodiments the level of lithium salt doping is between 0.45 mol/kg and 0.8 mol/kg.

The lithium salt may according to various embodiments be any lithium salt. According to one preferred embodiment the lithium salt is LiBF₄. This salt unexpectedly provides excellent conductivity, low viscosity, high lithium ion diffusivity and allows lithium plating and stripping to occur at higher current densities than other FSI-based electrolytes with different lithium salts. This combination is also advantageous in a device due to the lower molecular weight of the electrolyte increasing the energy density of the cell. In another preferred embodiment the lithium salt is LiPF₆. Again, this salt shows improved physicochemical properties in FSI-based ionic liquid electrolytes, including enhanced lithium diffusivity which allows lithium plating and stripping to occur at higher current densities. According to other embodiments, the lithium salt can be selected from one or a mixture of lithium salts of:
(i) bis(alkylsulfonyl)imides, and perfluorinated bis(alkylsulfonyl)imides such as bis(trifluoromethylsulfonyl)imide (the term "amide" instead of "imide" is sometimes used in the scientific literature) or another of the sulfonyl imides. This includes (CH₃SO₂)₂N⁻, (CF₃SO₂)₂N⁻ (also abbreviated to Tf₂N) and (C₂F₅SO₂)₂N⁻ as examples. The bis imides within this group may be of the formula (CₓY₂ₓ₊₁SO₂)₂N⁻ where x = 1 to 6 and Y = F or H.
(ii) BF₄⁻ and perfluorinated alkyl fluorides of boron. Encompassed within the class are B(CₓF₂ₓ₊₁)ₐF₄₋ₐ⁻ where x is an integer between 0 and 6, and a is an integer between 0 and 4.
(iii) Halides, alkyl halides or perhalogenated alkyl halides of group VA(15) elements. Encompassed within this class is E(CₓY₂ₓ₊₁)ₐ(Hal)₆₋ₐ⁻ where a is an integer between 0 and 6, x is an integer between 0 and 6, y is F or H, and E is P, As, Sb or Bi. Preferably E is P or Sb. Accordingly this class encompasses PF₆⁻, SbF₆⁻, P(C₂F₅)₃F₃⁻, Sb(C₂F₅)₃F₃⁻, P(C₂F_{B})₄F₂⁻, AsF₆⁻, F[C₂H₅)₃F₃⁻ and so forth.
(iv) CₓY₂ₓ₊₁SO₃⁻ where x = 1 to 6 and Y = F or H. This class encompasses CH₃SO₃⁻ and CF₃SO₃⁻ as examples.
(v) CₓF₂ₓ₊₁COO⁻, including CF₃COO⁻
(vi) sulfonyl and sulfonate compounds, namely anions containing the sulfonyl group SO₂, or sulfonate group SO₃⁻ not covered by groups (i) and (iv) above. This class encompasses aromatic sulfonates containing optionally substituted aromatic (aryl) groups, such as toluene sulfonate and xylene sulfonate
(vii) cyanamide compounds and cyano group containing anions, including cyanide, dicyanamide and tricyanomethide
(viii) Succinamide and perfluorinated succinamide (ix) Ethylendisulfonylamide and its perfluorinated analogue
(x) SCN⁻
(xi) Carboxylic acid derivatives, including CₓH₂ₓ₊₁COO⁻ where x is an integer between 1 and 6
(xii) Weak base anions
(xiii) Halide ions such as the iodide ion Classes (i) to (vii) are preferred.

The electrolyte comprises more than one of the further components of room temperature ionic liquids, diluents, solid electrolyte interphase-forming additives, gelling additives and organic solvents.

Solid electrolyte interphase-forming additives improve the deposit morphology and efficiency of the lithium cycling process. The gelling additives provide a gel material while retaining the conductivity of the liquid. Suitable gelling additives include ionorganic particulate materials (sometimes referred to as nanocomposites or nano-fillers, being fine particulate inorganic composites). Amongst these are SiO₂, TiO₂ and Al₂O₃.

### Negative electrodes

The negative electrode generally comprises a current collector, which may be metal substrate, and a negative electrode material.

The negative electrode material can be lithium metal, a lithium alloy forming material, or a lithium intercalation material; lithium can be reduced onto/into any of these materials electrochemically in the device. Of particular interest are lithium metal, lithiated carbonaceous materials (such as lithiated graphites, activated carbons, hard carbons and the like), lithium intercalating metal oxide based materials such as Li₄Ti₅O₁₂, metal alloys such as Sn-based systems and conducting polymers, such as n-doped polymers, including polythiophene and derivatives thereof. For a description of suitable conducting polymers, reference is made to P. Novak, K. Muller, K. S. V. Santhanam, O. Haas, "Electrochemically active polymers for rechargeable batteries", Chem. Rev., 1997, 97, 207 - 281, the entirety of which is incorporated by reference.

In the construction of an energy storage device, and particularly batteries, it is common for the negative electrode material to be deposited on the current collector during a formation stage from the electrolyte. Accordingly, the references to the requirement of a negative electrode material in the negative electrode encompass the presence of a negative electrode-forming material (anode-forming material) in the electrolyte that will be deposited on the anode during a formation stage.

In the situation where a negative electrode material is applied to the current collector prior to construction of the energy storage device, this may be performed by preparing a paste of the negative electrode material (using typical additional paste components, such as binder, solvents and conductivity additives), and applying the paste to the current collector. Examples of suitable negative electrode material application techniques include one or more of the following:
(i) Coating;
(ii) Doctor-blading;
(iii) Chemical polymerisation onto the surface, in the case of the conductive polymers;
(iv) Printing, such as by ink-jet printing;
(v) Electro-deposition (this technique may involve the inclusion of redox active materials or carbon nanotubes);
(vi) Electro-spinning (this technique may involve the application of multiple layers, along with the inclusion of carbon nanotubes when applying a conductive polymer);
(vii) direct inclusion of the anode material in the polymer forming a synthetic fibre material-based fabric, through extrusion and/or electrospinning of the synthetic fibre;
(viii) vapour deposition and/or plasma reactor deposition.

It is noted that the negative electrode material may be applied in the form of the anode material itself, or in the form of two or more anode precursor materials that react in situ on the current collector to form the anode material. In this event, each anode precursor material can be applied separately by one or a combination of the above techniques.

As foreshadowed above, the negative electrode surface may be formed either in situ or as a native film. The term "native film" is well understood in the art, and refers to a surface film that is formed on the electrode surface upon exposure to a controlled environment prior to contacting the electrolyte. The exact identity of the film will depend on the conditions under which it is formed, and the term encompasses these variations. The surface may alternatively be formed in situ, by reaction of the negative electrode surface with the electrolyte. The use of a native film is preferred.

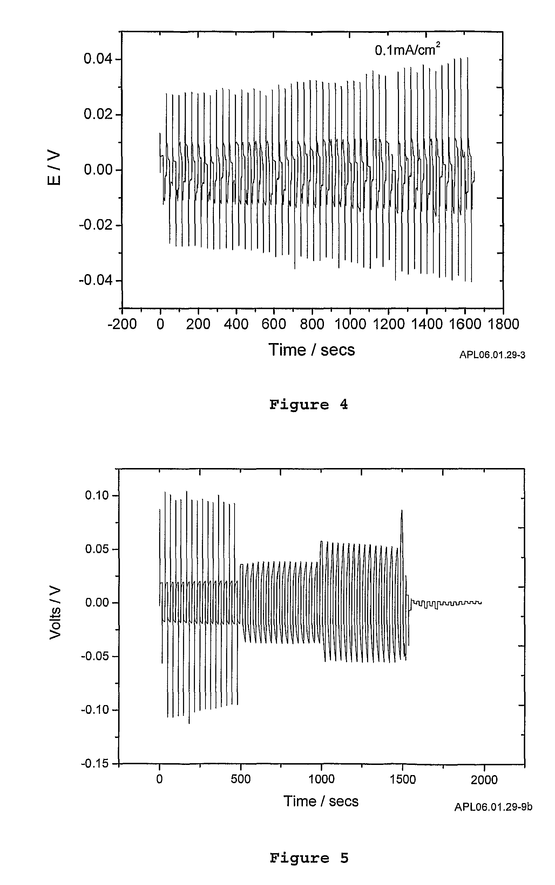

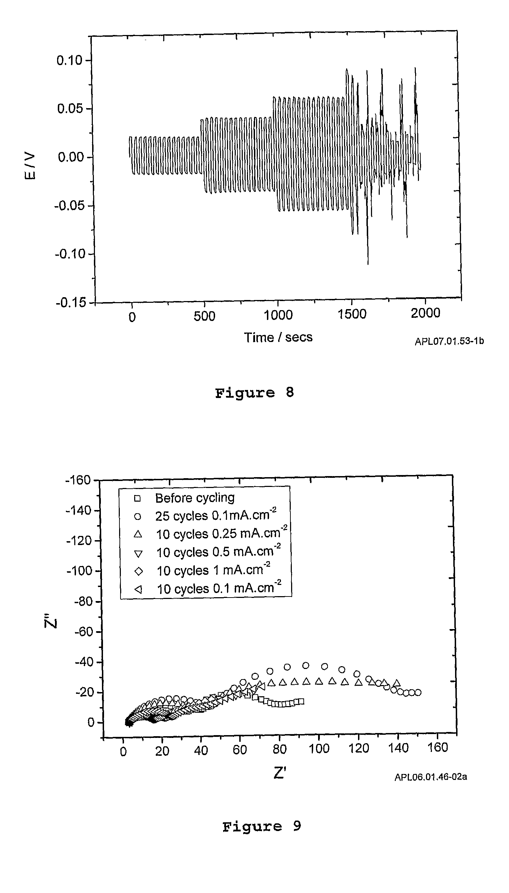

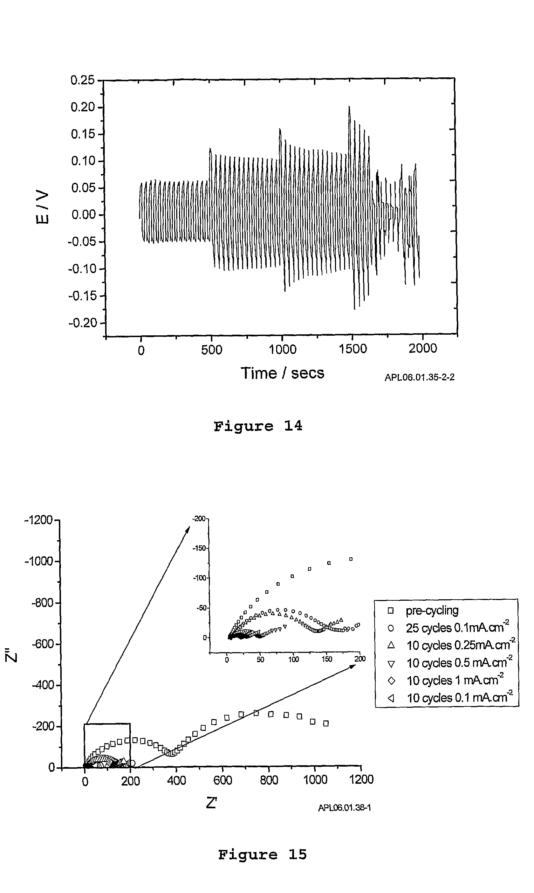

In the lithium energy storage devices of the present invention comprising an FSI-based ionic liquid electrolyte with lithium ions at a level of between 0.3 and 1.5 mol/kg of ionic liquid, we believe physical changes in the microstructure on the negative electrode material occur as evidenced by Figures 5, 8, and 14. When cycling these cells at galvanostatically at high current densities (≥ 1 mA.cm⁻²), a sudden and consistent drop in the cells over-potential occurs. Using impedance spectroscopy, as shown in Figures 9 and 15, a significant decrease in the impedance of the cell is observed. These changes show a decrease in the interfacial resistance (defined as the resistance between the electrode and the electrolyte) of the cell that could be due to either the formation of a highly conductive SEI and / or a significant change in the surface area of the electrode.

In support of these observations, we refer to the recently published work by Wang et al., Journal of The Electrochemical Society, 155 (5) 2008 A390 - A394. The authors have studied the interfacial resistance of the electrode / electrolyte and the cyclability of two types of lithium morphologies; a templated porous lithium metal and a foil lithium metal. The authors have used a standard aprotic electrolyte for these studies which is not optimal as these electrolytes are not intrinsically stable to lithium metal and do degrade with time. The authors show that highly porous lithium metal shows a much lower interfacial resistance and enhanced cyclability over lithium foil which is consistent for the results described in this specification.

### Current collector

The current collector can be a metal substrate underlying the negative electrode material, and may be any suitable metal or alloy. It may for instance be formed from one or more of the metals Pt, Au, Ti, Al, W, Cu or Ni. Preferably the metal substrate is Cu or Ni.

### Positive electrodes and LiMPO₄

According to certain preferred embodiments of the invention, the positive electrode material is a lithium metal phosphate - LiMPO₄ or "LMP".

The metal of the lithium metal phosphate is a metal of the first row of transition metal compounds. These transition metals include Sc, Ti, V, Cr, Mn, Fe, Co, Ni and Cu. Iron (Fe) is preferred, and this compound (and doped versions thereof) are referred to as lithium iron phosphates - LiFePO₄ or LFP.

It is noted that the lithium metal phosphate may further comprise doping with other metals to enhance the electronic and ionic conductivity of the material. The dopant metal may also be of the first row of transition metal compounds.

According to other embodiments, the positive electrode material for the lithium energy storage device can be selected from any other suitable lithium battery positive electrode material. Of particular interest are other lithium intercalating metal oxide materials such as LiCoO₂, LiMn₂O₄, LiMnNiO₄ and analogues thereof, conducting polymers, redox conducting polymers, and combinations thereof. Examples of lithium intercalating conducting polymers are polypyrrole, polyaniline, polyacetylene, polythiophene, and derivatives thereof. Examples of redox conducting polymers are diaminoanthroquinone, poly metal Schiff-base polymers and derivatives thereof. Further information on such conducting polymers can be found in the Chem. Rev. reference from above.

In the case of non-LMP positive electrode materials, such as lithium intercalating metal oxide materials, these typically need to be coated with a protecting material, to be capable of withstanding the corrosive environment of the FSI-based ionic liquid. This may be achieved by coating the electrochemically active material with a thin layer (1-10 nanometer is preferred) of inert material to reduce the leaching of the transition metal ion from the metal oxide material. Suitable protecting material coatings include zirconium oxide, TiO₂, Al₂O₃, ZrO₂ and AlF₃.

Positive electrode materials are typically applied to the current collector prior to construction of the energy storage device. It is noted that the positive electrode or cathode material applied may be in a different state, such as a different redox state, to the active state in the battery, and be converted to an active state during a formation stage.

The positive electrode material is typically mixed with binder such as a polymeric binder, and any appropriate conductive additives such as graphite, before being applied to or formed into a current collector of appropriate shape. The current collector may be the same as the current collector for the negative electrode, or it may be different. Suitable methods for applying the positive electrode material (with the optional inclusion of additives such as binders, conductivity additives, solvents, and so forth) are as described above in the context of the negative electrode material.

In some embodiments, the positive electrode material is coated to enhance electrical conductivity to maintain capacity of the device and stabilize the positive electrode material against dissolution by the ionic liquid electrolyte. The coating may, for example, be formed from the lithium intercalating conducting polymers referred to above.

### Other device features

When present, the separator may be of any type known in the art, including glass fibre separators and polymeric separators, particularly microporous polyolefins.

Usually the battery will be in the form of a single cell, although multiple cells are possible. The cell or cells may be in plate or spiral form, or any other form. The negative electrode and positive electrode are in electrical connection with the battery terminals.

### Interpretation

References to "a" or "an" should be interpreted broadly to encompass one or more of the feature specified. Thus, in the case of "an anode", the device may include one or more anodes.

In this application, except where the context requires otherwise due to express language or necessary implication, the word "comprise" or variations such as "comprises" or "comprising" is used in an inclusive sense, i.e. to specify the presence of the stated features but not to preclude the presence or addition of further features.

### Examples

The present invention will now be described in further detail with reference to the following examples, which demonstrate the principles behind the present invention.

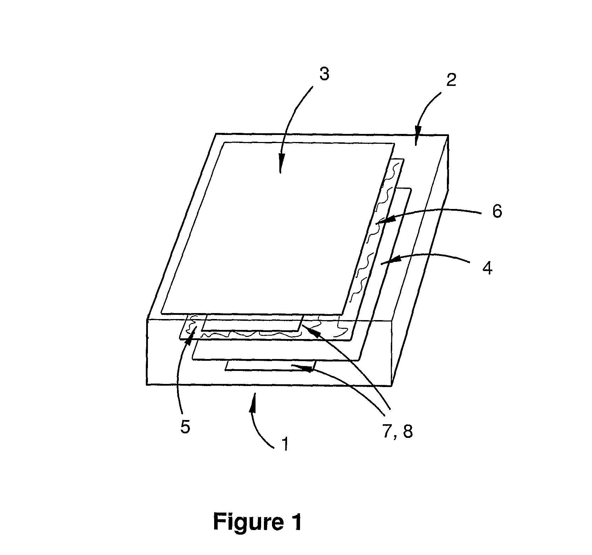

A secondary lithium battery (1) produced in accordance with the invention is shown schematically in Figure 1. This battery comprises a case (2), at least one positive electrode (3) (one is shown) comprising lithium iron phosphate, at least one negative electrode (4) (one is shown) an ionic liquid electrolyte comprising bis(fluorosulfonyl)imide as the anion and a cation counterion and a lithium salt (5), a separator (6) and electrical terminals (7,8) extending from the case (2). The battery (1) illustrated is shown in plate-form, but it may be in any other form known in the art, such as spiral wound form.

### Materials tested

Bis(fluoromethansulfonyl)imide was used in all examples as the anion component of the ionic liquid electrolyte. This anion has a molecular weight of 180.12 g/mol compared to bis(trifluoromethansulfonyl)imide or TFSI with a molecular weight of 280.13 g/mol. The use of a lower molecular weight anion has significant advantages for batteries in terms of higher energy density, lower viscosity and melting points assisting a wider operating temperature range.

The cation counterion of the ionic liquid subjected to the tests were: 1-methyl-3-ethylimidiazolium (EMIM), 1-butyl-2-methyl-3-methylimidiazolium (BMMIM) and 1-methyl-propyl-pyrrolidinium (Pyr₁₃). Other suitable cation counterions include, but are not limited to, 1-butyl-3-methylimidiazolium (BMIM), 1-methyl-propyl-piperidinium (Pp₁₃) and trihexyldodecylphosphonium (P₆₆₆₁₄). It will be observed that the numerals in subscript refer to the alkyl chain length for the substituents on each of the ring systems, and that the Pyr refers to pyrrolidinium, Pp refers to piperidinium and P refers to phosphonium. These structures are illustrated below, where (a) is the substituted imidiazolium cation, (b) is the pyrrolidinium cation, (c) is the piperidinium cation, (d) is the phosphonium cation and (e) the FSI anion. In all cases R denotes the alkyl substituent.

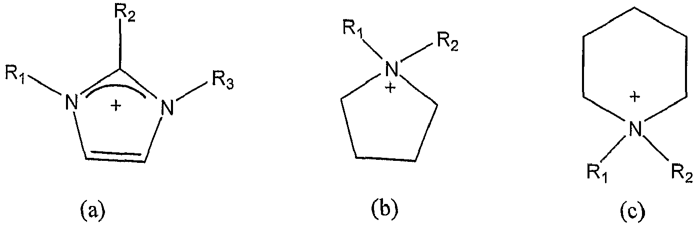

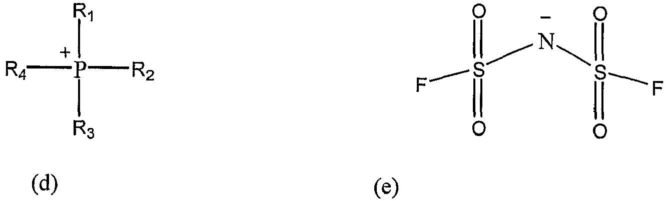

### Example 1: Preparation and testing of Pyr₁₃FSI with LiTFSI.

Lithium bis(trifluoromethansulfonyl)imide (LiTFSI) is dissolved into the Pyr₁₃FSI at a concentration of between 0.2 mol/kg and 1.5 mol/kg, but optimally at 0.5 mol/kg.

Stirring may be required to dissolve the salt.

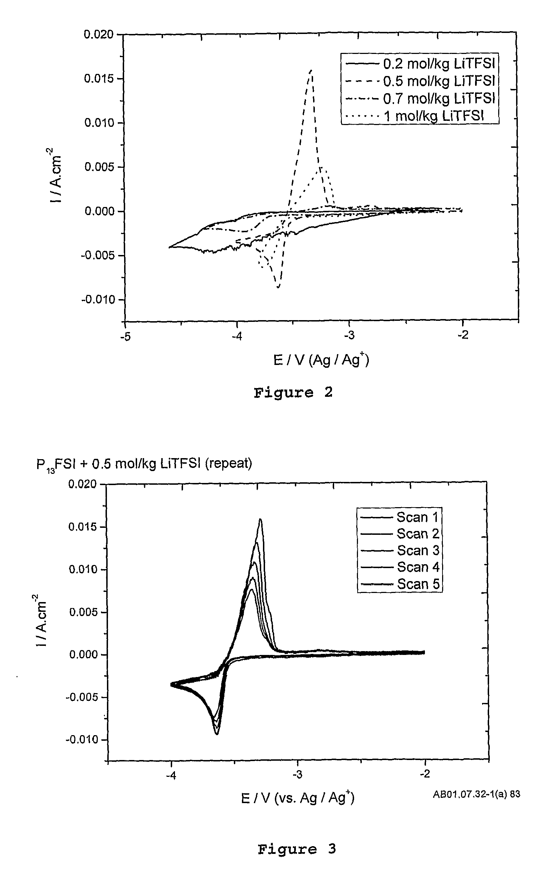

Figure 2 shows a comparison of different electrolyte concentrations. From this figure it is observed that at 0.5 mol/kg LiTFSI, the plating and stripping currents on the platinum (Pt) working electrode are maximised due to high conductivity of the electrolyte and high lithium self-diffusion co-efficients. At low salt concentrations (0.2 mol/kg), there is not enough lithium TFSI salt in solution to provide a sufficient mixture of both FSI and TFSI anions to provide an electrochemical window wide enough to (a) establish a stable solid electrolyte interface and (b) enough lithium-ions to plate. At 0.7 mol/kg there was a significant decrease in peak heights for plating and stripping of lithium as the viscosity of the electrolyte increases together with a concomitant decrease in the conductivity and lithium self diffusion co-efficients. At 1 mol/kg, there was a further significant decrease in plating and stripping currents, together with a large peak separation which again emphasises the increased viscosity and lower conductivity of the electrolyte and lower lithium ion self diffusion coefficients.

Using the 0.5 mol/kg LiTFSI salt concentration, multiple scans between -2 and -4V have been conducted as shown in Figure 3. The figure shows the excellent reproducibility over a repeated number of scans.

To determine the usefulness of the Pyr₁₃FSI + 0.5 mol/kg LiTFSI under galvanostatic conditions like those experienced in a real device, symmetrical lithium cells were prepared to understand issues such as polarisation of the electrodes, polarisation of the electrolyte, and the resistances which form within the cell as a function of such cycling. These effects translate into the potentials observed in Figures 4 and 5. When these effects are minimised, the voltages observed are low. Where there are large resistances and polarisations, these voltages will be much higher. As the current densities used in the cell increases, the voltage response should remain unchanged.

A symmetrical 2032 coin cell was assembled using the following procedure: a lithium disk of 10mm diameter (cleaned using hexane to remove any nitride or oxide species from the surface) was placed on the bottom of the cell, followed by a larger separator, preferably a glass fibre, to which 5 to 6 drops of the electrolyte was added. A second lithium disk, cleaned and 10mm in diameter, is put in the top of the cell followed by a stainless steel spacer, spring and cap. The coin cell was then hermetically sealed using a crimping tool.

The cell was then allowed to sit at the test preferred temperature (between 25°C and 100°C) to equilibrate prior to symmetrical cycling. The test procedure involved cycling the cell at 0.1mA.cm⁻² for 16 minutes; the time that it takes to strip and plate 1 Coulomb of lithium. This was done 50 times, noting the change in the over potential of the cell. Should a cell show a low over potential after this cycling, higher current densities were used, eg. 0.25, 0.5, 1, 2, 5 and 10mA.cm⁻² (see Figure 4).

Subsequently, the profile was changed to look at response of the cell to increasing current densities as shown in Figure 5. When cycled at 1 mA.cm⁻² (right of Figure 5), the over-potential of the cell collapses.

Example 2: Preparation and testing of Pyr₁₃FSI and LiBF₄.

Lithium tetrafluoroborate (LiB_{F4}) was dissolved into the Pyr₁₃FSI at a concentration of between 0.2 mol/kg and 1.5 mol/kg, but optimally at 0.5 mol/kg as determined from electrochemistry, differential scanning calorimetry (DSC) viscosity and Nuclear Magnetic Resonance (NMR) measurements. Stirring may be required to dissolve the salt.

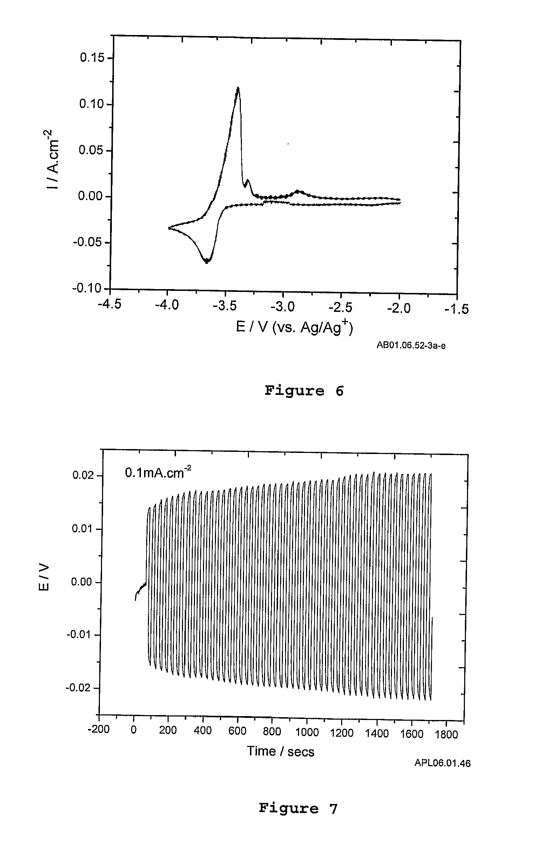

Using the 0.5 mol/kg LiBF₄ salt concentration, a voltammagram between -2 and -4V have been conducted as shown in Figure 6. The figure shows the plating and stripping of lithium on a platinum electrode.

To determine the usefulness of the Pyr₁₃FSI + 0.5 mol/kg LiBF₄ under galvanostatic conditions like those experienced in a real device, symmetrical lithium cells were prepared to understand issues such as polarisation of the electrodes, polarisation of the electrolyte, and the resistances which form within the cell as a function of such cycling. These effects translate into the potentials observed in Figures 7 to 9.

Coin cells were prepared using the same methodology as described in Example 1 and cycled using the same testing procedure. Figure 7 shows the response of a cell with Pyr_{I3}FSI + 0.5 mol/kg LiBF₄ cycled galvanostatically at 0.1mA.cm⁻² at 50°C.

Subsequently, the profile was changed to look at response of the cell to increasing current densities as shown in Figure 8. A similar effect to that observed in Figure 5 was observed by cycling the cell at a current density of 1 mA.cm⁻², the over-potential of the cell collapses to the values seen for the 0.1 mA.cm⁻² current.

Using impedance spectroscopy, the resistance of symmetrical cells after cycling at different current densities was examined. Figure 9 shows that as a function of this cycling, the total resistance of the cell drops by over 50% from the pre-cycling value, showing that a stable, conductive SEI can be established on the lithium electrode that will allow lithium to be plated and stripped at high current densities.

### Example 3: Preparation and testing of Pyr₁₃FSI with LiPF₆

Lithium hexafluorophosphate (LiPF₆) was dissolved into the Pyr₁₃FSI at a concentration of between 0.2 mol/kg and 1.5 mol/kg, but optimally at 0.5 mol/kg as determined from electrochemistry measurements. Stirring may be required to dissolve the salt.

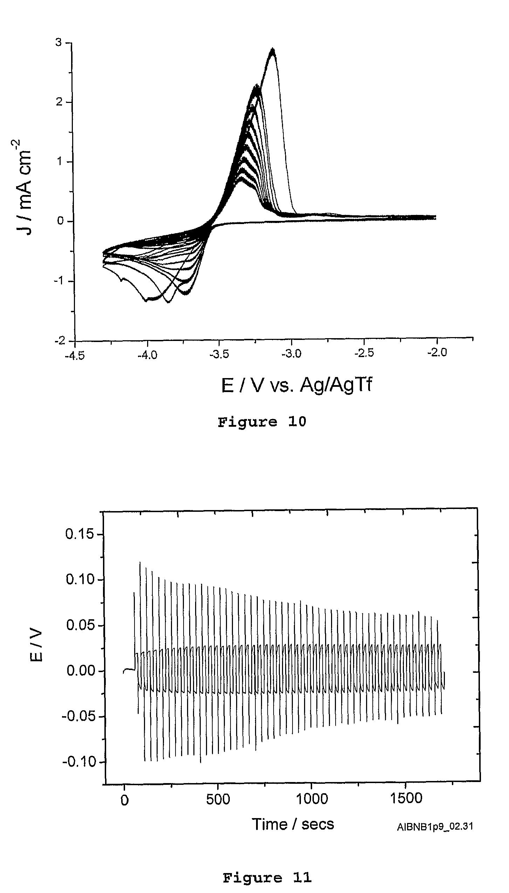

Using the 0.5 mol/kg LiPF₆ salt concentration, a voltammagram between -2 and -4.25V have been conducted as shown in Figure 10. The figure shows every second scan of the plating and stripping of lithium on a platinum electrode, the current normalised to the electrode area.

To determine the usefulness of the Pyr₁₃FSI + 0.5 mol/kg LiPF₆ under galvanostatic conditions like those experienced in a real device, symmetrical lithium cells were prepared to understand issues such as polarisation of the electrodes, polarisation of the electrolyte, and the resistances which form within the cell as a function of such cycling. These effects translate into the potentials observed in Figures 11.

Coin cells were prepared using the same methodology as described in Example 1 and cycled using the same testing procedure. Figure 11 shows the response of a cell with Pyr₁₃FSI + 0.5 mol/kg LiPF₆ cycled galvanostatically at 0.1mA.cm⁻² at 50°C. The overpotentials in this plot are some of the lowest observed to-date for cells of this type. When cycling these cells at higher current densities, an almost invariant over-potential across current densities from 0.1 mA.cm⁻² to 1 mA.cm⁻² was noted and this also appears to be independent of temperature.

### Example 4: Preparation and testing of EMIM FSI with LiTFSI.

Lithium bis(trifluoromethansulfonyl)imide (LiTFSI) was dissolved into the EMIM FSI at a concentration of between 0.2 mol/kg and 1.5 mol/kg, but optimally at 0.5 mol/kg as determined from electrochemistry, differential scanning calorimetry (DSC) viscosity and Nuclear Magnetic Resonance (NMR) measurements.

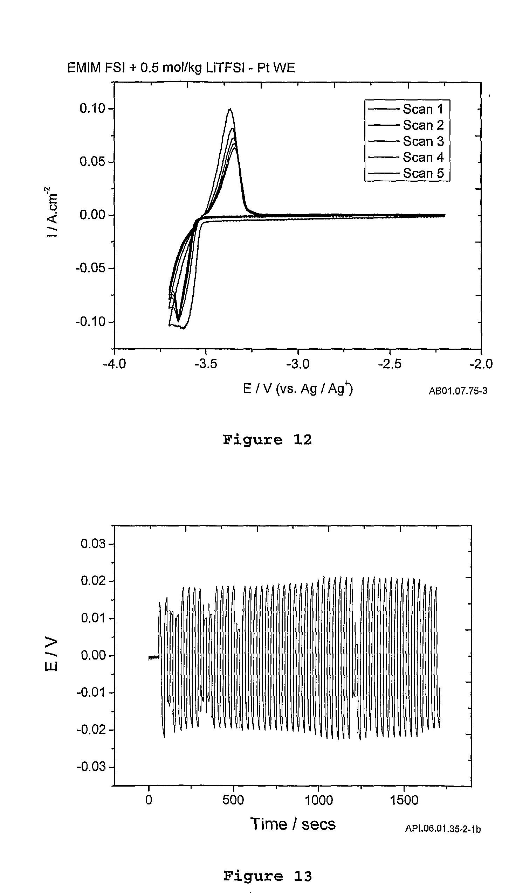

Figure 12 shows the cyclic voltammetry response for EMIM FSI + 0.5 mol/kg LiTFSI at room temperature. The peak currents for plating and stripping of lithium observed for this system are much higher than those for the Pyr₁₃FSI + 0.5 mol/kg LiTFSI due to lower viscosity of this electrolyte (35mPa.s⁻¹ for the EMIM FSI + 0.5 mol/kg LiTFSI versus 80mPa.s⁻¹ for Pyr₁₃FSI + 0.5 mol/kg LiTFSI) and higher ionic mobility of the lithium ion within solution (8.4 x 10⁻¹¹ m².s⁻¹ for EMIM FSI + 0.5 mol/kg LiTFSI versus 4.7 x 10⁻¹¹ m².s⁻¹ for Pyr₁₃FSI + 0.5mol/kg LiTFSI at 40°C). Melting points for this family of electrolytes are also significantly lower.

To determine the usefulness of the EMIM FSI + 0.5 mol/kg LiTFSI under galvanostatic conditions like those experienced in a real device, symmetrical lithium cells were prepared to understand issues such as polarisation of the electrodes, polarisation of the electrolyte, and the resistances which form within the cell as a function of such cycling. These effects translate into the potentials observed in Figures 13 to 14. When these effects are minimised, the voltages observed are low. Where there are large resistances and polarisations, these voltages will be much higher. As the current densities used in the cell increases, the voltage response should remain unchanged (see Figure 13).

Coin cells were prepared using the same methodology as described in Example 1 and cycled using the same testing procedures as in Examples 1 and 2.

Subsequently, the profile was changed to look at response of the cell to increasing current densities as shown in Figure 14.

Using impedance spectroscopy, the resistance of the symmetrical cells after cycling at different current densities was examined. Figure 15 shows that as a function of this cycling, the total resistance of the cell drops by over 50% from the pre-cycling value, showing that a stable, conductive SEI can be established on the lithium electrode that will allow lithium to be plated and stripped at high current densities.

### Example 5: Preparation and testing of LiFePO₄ (LFP) with Pyr₁₃FSI + 0.5 mol/kg LiTFSI.

(not scope of the claims)

A cell containing a cathode of LiFePO₄ (LFP, Phostec, Canada) was prepared via the method below. As will be apparent to a person skilled in the art other materials or methodologies could be used to prepare similar cells containing a cathode of LiFePO₄.

### SLURRY

1. Dried LFP and Shawinigan Carbon Black (CB) over a period of seven (7) days at 100°C.
2. In a 50ml jar, with 3x12mm and 12x5mm Alumina spheres, LFP (4.0g) and Shawinigan carbon black (0.8g) are mixed together for 3-4 hours. This mix provides an approximate loading of 1.8 mg.cm⁻² of active material on the current collector.
3. 4.4g of PVdF solution (12% PVdF dissolved in N-MethylPyrrolidone NMP, Aldrich) is then added to the powder mixture so that the final percentage by weight of each component is 75:15:10 (LFP: CB:BINDER).
4. The slurry is then mixed overnight and added another 3ml of NMP, mixed for another hour, added a further 1ml NMP and further more mixed for another 1-2 hours until the correct consistency is achieved.

### COATING

1. Placed some of the slurry on the end of the sticky-pad where it meets the foil with a spatula and evenly distributed along the sticky-pad.
2. Using 60 micron and 100 micron rollers, roll down the aluminium foil with one steady stroke.
3. Let the coating dry under the fumehood to remove the excess solvent over two nights before storing the coatings in a bag.

### COIN CELLS

1. Used a 10mm diameter puncher and punched out disks of cathode material.
2. These disks were weighed prior to being placed in a vacuum oven at 100°C over seven (7) days.
3. The coins were made in a glove box filled with Argon, a 13mm diameter Li foil was punched out and cleaned with hexane to remove any nitride and oxide species.
4. A separator of the type, but not limited to Celgard, DSM Solupor, Whatford Glass Fibre filter paper, ∼15mm diameter to ensure that the cell cannot short.
5. Place 3 drops of electrolyte onto cathode, then 2 more drops on top of the separator and wait for a short time as the electrolyte is absorbed into the separator.
6. Placed the cleaned Li foil on top of the separator, followed by the stainless steel spacer, a spring and the cap of the coin cell. The cell is then crimped to hermetically seal it.
7. Cells cycled immediately.

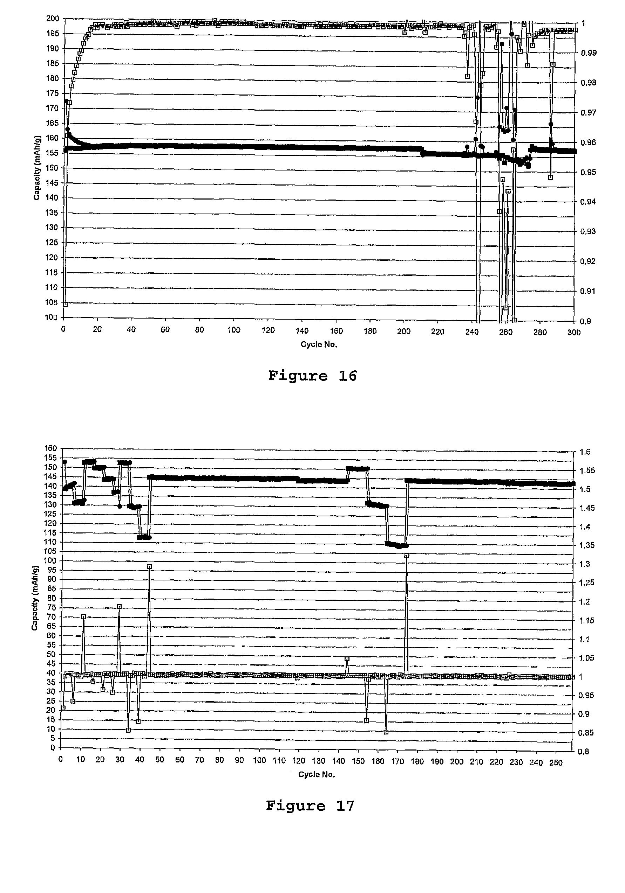

Figure 16 shows a cell consisting of a lithium metal electrode, with a DSM Solupor separator impregnated with Pyr₁₃FSI + 0.5 mol/kg LiTFSI and a LiFePO₄ cathode with an active material loading of 1.8mg.cm⁻². The cell is a 2032 coin cell. The cell is assembled with the lithium metal electrode having a capacity much greater than the cathode. The cell was heated to 50°C before being charged galvanostatically using a C/10 to 3.8V followed by a discharge at C/10 to 3V to 100% degree of discharge (DoD). The theoretical capacity of LiFePO₄ is 170 mAh.g⁻¹. As can be seen in the figure, the cell was cycled for 210 cycles with an average discharge capacity of 158 mAh.g⁻¹ with a discharge efficiency of 99.8% which is yet to be observed for a cell of this type. The next 68 cycles were completed at C/5 charge and discharge rates, with a slight reduction in capacity, but with high discharge efficiency. The remaining cycles were completed at C/10.

By varying the charge and discharge currents of the same cell, the cells usefulness for other applications where higher rates are required, such as charging of lap-top computers, mobile phones, hybrid electric vehicles, etc. can be determined. Figure 17 shows a cell constructed in the same manner as the one used to obtain the results shown in Figure 16. The cell was heated to 50°C before being charged at C/10 (and for subsequent cycles) and run through various discharge rates in order of C/2, 1C, C/10, C/5, C/2, 1C, C/10, 2C, 4C, C/2, C/10, 2C, 4C and finally C/2 to 100% DoD in all cases. We note that at even 4C discharge rates, the cell can provide 75% of its C/10 capacity while maintaining high discharge efficiency.

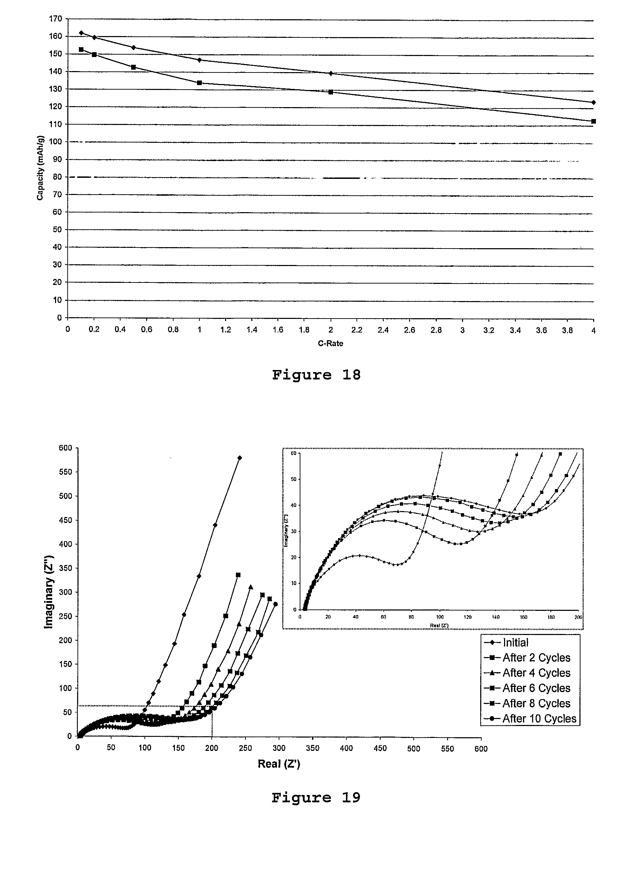

Figure 18 shows the capacity retention of two cells constructed in the same manner as the cell used to obtain the results shown in Figure 16. The plot shows the capacity retention of the cell as function of current density or C-rate cycling. The drop in capacity is linked to the diffusion of lithium-ions in the electrolyte.

In order to further understand the why these cells perform better than current state-of-the-art electrolytes, impedance spectroscopy was used to investigate the resistance within the Li / Pyr₁₃FSI + 0.5mol/kg LiTFSI / LiFePO₄ cell. We note that as a function of cycling the internal resistance of the cell decreases, suggesting the formation of a conductive and stable solid electrolyte interface that promotes high cyclic efficiency in the cell (see Figure 19).

Additional testing has been performed on LFP cells with an increased loading of active materials.

### Example 6: Preparation and testing of LiFePO₄ (LFP) with 1-Butyl-2-methyl-3-methylimidiazolium (BMMIM) FSI + 0.5 mol/kg LiTFSI

(not scope of the claims)

Using the same slurry preparation method, coating techniques and coin cell testing as used in Example 5, electrodes with an active material loading of 5 mg.cm⁻² (equating to a coating thickness of 66 microns) were prepared. Using the 1-butyl-2-methyl-3-methylimidiazolium FSI (BMMIM FSI) + 0.5 mol/kg LiTFSI electrolyte, these cells were cycled at both 50 °C and room temperature.

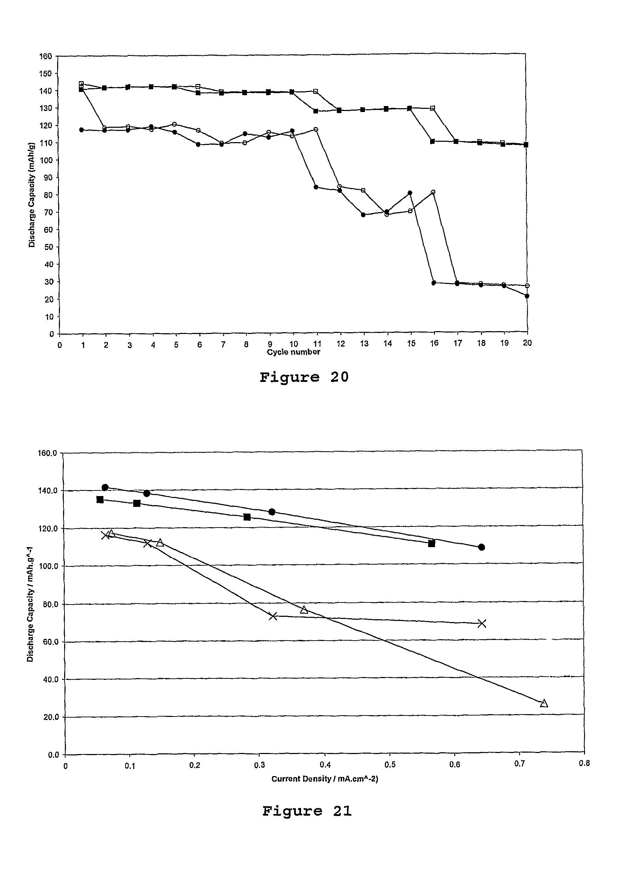

Figure 20 shows the discharge capacity versus cycle number for a cell with the above electrolyte cycled at both room temperature and 50°C. With the higher loading of active material, there is a decrease in the specific capacity of the electrode from those observed in Example 5. At 50°C the cell retained ∼80% of its C/10 capacity at 1C. At lower temperatures, issues surrounding viscosity and conductivity of the electrolyte appear to be limiting the capacity of the cell.

Figure 21 summarises the cell's rate capability at both room temperature and 50°C.

## Claims

1. A lithium energy storage device comprising:
- at least one positive electrode,
- at least one negative electrode, and
- an ionic liquid electrolyte comprising
bis(fluorosulfonyl)imide as the anion and a cation counterion, and lithium ions at a level of greater than 0.3 mol/kg of ionic liquid, and not more than 1.5 mol/kg of ionic liquid, wherein the ionic liquid electrolyte comprises more than one of the further components of room temperature ionic liquids, diluents, solid electrolyte interphase-forming additives, gelling additives and organic solvents.

2. The lithium energy storage device of claim 1, wherein the ionic liquid electrolyte comprises LiBF₄ and/or LiPF₆.

3. The lithium energy storage device of claim 1 or 2, comprising at least one positive electrode comprising lithium metal phosphate, in which the metal is a first-row transition metal, or a doped derivative thereof.

4. The lithium energy storage device of claim 3, wherein the lithium metal phosphate is lithium iron phosphate.

5. The lithium energy storage device of any one of claims 1 to 4, wherein the ionic liquid electrolyte comprises lithium ions in an amount of from 0.35 to 1.0 mol/kg of ionic liquid.

6. The lithium energy storage device of any one of claims 1 to 5, wherein the ionic liquid electrolyte comprises LiBF₄.

7. The lithium energy storage device of any one of claims 1 to 6, wherein the cation counterion is 1-methyl-3-ethylimidiazolium (EMIM), 1-butyl-3-methylimidiazolium (BMIM),1-butyl-2-methyl-3-methylimidiazolium (BMMIM), 1-methyl-propyl-pyrrolidinium (Pyr₁₃), 1-methyl-propyl-piperidinium (Pyr₁₃) or trihexyldodecylphosphonium (P₆₆₆₁₄).

8. The lithium energy storage device of any one of claims 1 to 7, wherein the ionic liquid electrolyte comprises lithium ions in an amount of from 0.4 to 1.0 mol/kg of ionic liquid.

9. The lithium energy storage device of any one of claims 1 to 8, wherein the ionic liquid electrolyte comprises lithium ions in an amount of from 0.45 to 0.8 mol/kg of ionic liquid.

10. The lithium energy storage device of any one of claims 1 to 9, wherein the lithium energy storage device is an asymmetric (hybrid) battery-supercapacitor.

11. The lithium energy storage device of any one of claims 1 to 10, wherein the ionic liquid electrolyte comprises one or more solid electrolyte interphase-forming additives and/or one or more gelling additives.

12. Use of the ionic liquid electrolyte of any one of claims 1 to 11 in the manufacture of a lithium energy storage device.

13. The use of claim 12, wherein the negative electrode surface of a negative electrode of the device is formed either *in situ* or as a native film.

14. A process for galvanostatically cycling a lithium energy storage device,
wherein the lithium energy storage device comprises:
- at least one positive electrode,
- at least one negative electrode, and
- an ionic liquid electrolyte comprising bis(fluorosulfonyl)imide as the anion and a cation counterion, and lithium ions at a level of greater than 0.3 mol/kg of ionic liquid, and not more than 1.5 mol/kg of ionic liquid, and
wherein the galvanostatic cycling is effected at a current density of greater than or equal to 1mA cm⁻².

15. The process of claim 14 whereby the galvanostatic cycling results in a decrease in interfacial resistance as defined by the resistance between the electrode and the electrolyte.

## Patentansprüche

1. Lithium-Energlespeichervorrichtung, umfassend:
- mindestens eine positive Elektrode,
- mindestens eine negative Elektrode und
- einen Elektrolyten aus ionischer Flüssigkeit, umfassend Bis(fluorsulfonyl)imid als das Anion und ein Kation-Gegenion und Lithiumionen in einem Gehalt von größer als 0,3 mol/kg Ionischer Flüssigkeit und nicht mehr als 1,5 mol/kg ionischer Flüssigkeit, wobei der Elektrolyt aus ionischer Flüssigkeit mehr als einen der weiteren Bestandteile von bei Raumtemperatur ionischen Flüssigkeiten, Verdünnungsmitteln, Feststoff-Elektrolyt-Zwischenphase-bildenden (engl, solid electrolyte Interphase-forming) Additiven, Gelieradditiven und organischen Lösemitteln umfasst.

2. Lithium-Energiespeichervorrichtung nach Anspruch 1, wobei der Elektrolyt aus ionischer Flüssigkeit LIBF₄ und/oder LiPF₆ umfasst.

3. Lithium-Energiespeichervorrichtung nach Anspruch 1 oder 2, umfassend mindestens eine positive Elektrode, die Lithlummetallphosphat umfasst, wobei das Metall ein Übergangsmetall der ersten Reihe oder ein dotiertes Derivat davon ist.

4. Lithium-Energiespeichervorrichtung nach Anspruch 3, wobei das Lithiummetallphosphat Lithiumeisenphosphat ist.

5. Lithium-Energiespeichervorrichtung nach einem von Anspruch 1 bis 4, wobei der Elektrolyt aus ionischer Flüssigkeit Lithiumionen in einer Menge von 0,35 bis 1,0 mol/kg ionischer Flüssigkeit umfasst.

6. Lithium-Energiespeichervorrichtung nach einem von Anspruch 1 bis 5, wobei der Elektrolyt aus ionischer Flüssigkeit LiBF₄ umfasst.

7. Lithium-Energiespeichervorrichtung nach einem von Anspruch 1 bis 6, wobei das Kation-Gegenion 1-Methyl-3-ethyllmidiazolium (EMIM), 1-Butyl-3-methylimidiazolium (BMIM), 1-Butyl-2-methyl-3-methylimidiazolium (BMMIM), 1-Methyl-propyl-pyrrolidinium (Pyr₁₃), 1-Methyl-propyl-piperidinium (Pyr₁₃) oder Trihexyldodecylphosphonium (P₆₆₆₁₄) ist.

8. Lithium-Energiespeichervorrichtung nach einem von Anspruch 1 bis 7, wobei der Elektrolyt aus ionischer Flüssigkeit Lithiumionen in einer Menge von 0,4 bis 1,0 mol/kg ionischer Flüssigkeit umfasst.

9. Lithium-Energiespeichervorrichtung nach einem von Anspruch 1 bis 8, wobei der Elektrolyt aus ionischer Flüsslgkeit Lithiumionen in einer Menge von 0.45 bis 0.8 mol/kg ionischer Flüssigkeit umfasst.

10. Lithium-Energiespeichervorrichtung nach einem von Anspruch 1 bis 9, wobei die Lithium-Energiespeichervorrichtung ein asymmetrischer (Hybrid-) Batterie-Superkondensator ist.

11. Lithium-Energiespeichervorrichtung nach einem von Anspruch 1 bis 10, wobei der Elektrolyt aus ionischer Flüssigkeit ein oder mehrere Feststoff-Elektrolyt-Zwischenphase-bildende Additive und/oder ein oder mehrere Gelieradditive umfasst.

12. Benutzung des Elektrolyten aus ionischer Flüssigkeit nach einem von Anspruch 1 bis 11 zur Herstellung einer Lithium-Energiespeichervorrichtung.

13. Benutzung nach Anspruch 12, wobei die negative Elektrodenoberfläche einer negativen Elektrode der Vorrichtung entweder *in situ* gebildet wird oder als ein nativer Film gebildet ist.

14. Verfahren zum galvanostatischen Zyklisieren einer Lithium-Energiespeichervorrichtung,
wobei die Lithium-Energiespeichervorrichtung umfasst:
- mindestens eine positive Elektrode,
- mindestens eine negative Elektrode und
- einen Elektrolyten aus ionischer Flüssigkeit, umfassend Bis(fluorsulfonyl)imid als das Anion und ein Kation-Gegenion und Lithiumionen in einem Gehalt von größer als 0,3 mol/kg ionischer Flüssigkeit und nicht mehr als 1,5 mol/kg ionischer Flüssigkeit und
wobei das galvanostatische Zyklisieren bei einer Stromdichte von größer als oder gleich 1 mA cm² durchgeführt wird.

15. Verfahren nach Anspruch 14, wodurch das galvanostatische Zykllsieren ein Sinken des Grenzflächenwiderstandes, definiert durch den Widerstand zwischen der Elektrode und dem Elektrolyten, ergibt.

## Revendications

1. Dispositif de stockage d'énergie au lithium comprenant :
- au moins une électrode positive,
- au moins une électrode négative, et
- un électrolyte liquide ionique comprenant du bis(fluorosulfonyl)imide en tant qu'anion et un contre-ion cationique, et des ions lithium à un taux supérieur à 0,3 mol/g de liquide ionique, et de pas plus de 1,5 mol/kg de liquide ionique, dans lequel l'électrolyte liquide ionique comprend plus d'un des autres composants choisis parmi les liquides ioniques à température ambiante, les diluants, les additifs formant une interphase d'électrolyte solide, les additifs gélifiants et les solvants organiques.

2. Dispositif de stockage d'énergie au lithium selon la revendication 1, dans lequel l'électrolyte liquide ionique comprend LiBF₄ et/ou LiPF₆.

3. Dispositif de stockage d'énergie au lithium selon la revendication 1 ou 2, comprenant au moins une électrode positive comprenant du phosphate de métal-lithium, dans lequel le métal est un métal de transition de la première rangée, ou un dérivé dopé de celui-ci.

4. Dispositif de stockage d'énergie au lithium selon la revendication 3, dans lequel le phosphate de métal-lithium est le phosphate de fer-lithium.

5. Dispositif de stockage d'énergie au lithium selon l'une quelconque des revendications 1 à 4, dans lequel l'électrolyte liquide ionique comprend des ions lithium en une quantité de 0,35 à 1,0 mol/kg de liquide ionique.

6. Dispositif de stockage d'énergie au lithium selon l'une quelconque des revendications 1 à 5, dans lequel l'électrolyte liquide ionique comprend LiBF₄.

7. Dispositif de stockage d'énergie au lithium selon l'une quelconque des revendications 1 à 6, dans lequel le contre-ion cationique est le 1-méthyl-3-éthylimidiazolium (EMIM), le 1-butyl-3-méthylimidiazolium (BMIM), le 1-butyl-2-méthyl-3-méthylimidiazolium (BMMIM), le 1-méthyl-propyl-pyrrolidinium (Pyr₁₃), le 1-méthyl-propyl-pipéridinium (Pyr₁₃) ou le trihexyldodécylphosphonium (P₆₆₆₁₄).

8. Dispositif de stockage d'énergie au lithium selon l'une quelconque des revendications 1 à 7, dans lequel l'électrolyte liquide ionique comprend des ions lithium en une quantité de 0,4 à 1,0 mol/kg de liquide ionique.

9. Dispositif de stockage d'énergie au lithium selon l'une quelconque des revendications 1 à 8, dans lequel l'électrolyte liquide ionique comprend des ions lithium en une quantité de 0,45 à 0,8 mol/kg de liquide ionique.

10. Dispositif de stockage d'énergie au lithium selon l'une quelconque des revendications 1 à 9, dans lequel le dispositif de stockage d'énergie au lithium est un supercondensateur-batterie asymétrique (hybride).

11. Dispositif de stockage d'énergie au lithium selon l'une quelconque des revendications 1 à 10, dans lequel l'électrolyte liquide ionique comprend un ou plusieurs additifs formant une interphase d'électrolyte solide et/ou un ou plusieurs additifs gélifiants.

12. Utilisation de l'électrolyte liquide ionique selon l'une quelconque des revendications 1 à 11 dans la fabrication d'un dispositif de stockage d'énergie au lithium.

13. Utilisation selon la revendication 12, dans laquelle la surface de l'électrode négative du dispositif est formée *in situ* ou en tant que film natif.

14. Procédé pour la périodicité galvanostatique d'un dispositif de stockage d'énergie au lithium,
dans lequel le dispositif de stockage d'énergie au lithium comprend :
- au moins une électrode positive,
- au moins une électrode négative, et
- un électrolyte liquide ionique comprenant du bis(fluorosulfonyl)imide en tant qu'anion et un contre-ion cationique, et des ions lithium à un taux supérieur à 0,3 mol/g de liquide ionique, et de pas plus de 1,5 mol/kg de liquide ionique, et
dans lequel la périodicité galvanostatique est effectuée à une densité de courant supérieure ou égale à 1 mA.cm⁻².

15. Procédé selon la revendication 14, dans lequel la périodicité galvanostatique entraîne une réduction de la résistance interfaciale telle que définie par la résistance entre l'électrode et l'électrolyte.
